# EUROPÄISCHE PATENTSCHRIFT

(11) **EP 2 617 500 B1**
(45) Veröffentlichungstag und Bekanntmachung des Hinweises auf die Patenterteilung: **17.06.2015**
(21) Anmeldenummer: 12151507.6
(22) Anmeldetag: 18.01.2012
(51) Int. Cl.: B21K 1/56, B21K 5/02, F16B 25/10, F16B 25/00

(54) **Verfahren zum Erstellen einer eine Schneide aufweisenden Bohrspitze einer einteiligen Stahlbohrschraube sowie einteilige Stahlbohrschraube**
Method for producing the drilling bit of a monoblock steel self-drilling screw and screw obtained
Procédé de fabrication de la pointe d'une vis auto-foreuse en acier monobloc ainsi que vis obtenue

(43) Veröffentlichungstag der Anmeldung: 24.07.2013
(73) Patentinhaber: ASC+Cawi Kalt- und Umformtechnik GmbH, 58809 Neuenrade (DE)
(72) Erfinder: Reineke, Hermann, 58809 Neuenrade (DE); Scanu, Michelle, 58840 Plettenberg (DE)
(74) Vertreter: Haverkamp, Jens

(56) Entgegenhaltungen:
- AU-A4- 2010 101 450
- JP-A- 53 057 351

## Beschreibung

Die Erfindung betrifft ein Verfahren zum Erstellen einer eine Schneide aufweisenden Bohrspitze einer einteiligen Stahlbohrschraube, insbesondere aus einem Edelstahlmaterial, wobei zum Erstellen der Bohrspitze der hierfür vorgesehene Endabschnitt eines schaftförmigen Rohlings umgeformt wird indem der zur Ausbildung der Bohrspitze vorgesehene Endabschnitt des Rohlings gegenüber dem angrenzenden Schaftabschnitt zum Erstellen eines Schneidplattenrohlings abgeplattet wird und der Schneidplattenrohling zum Ausformen der Bohrspitze umgeformt wird. Ferner betrifft die Erfindung eine einteilige Stahlbohrschraube mit einer Bohrspitze.

Bohrschrauben sind Schrauben, die ohne Vorbohren in einen Befestigungsgrund eingeschraubt werden können. In Abhängigkeit von dem jeweiligen Einsatzgebiet einer solchen Bohrschraube ist die Bohrspitze entsprechend konzipiert. Bohrschrauben, die in Bleche einzuschrauben sind, verfügen über eine typischerweise gewindefreie Bohrspitze mit einem weitestgehend zylindrischen Abschnitt und einen kurzen, sich daran zur Spitze hin verjüngenden Abschnitt. Um dieser Spitze Bohreigenschaften zuteil werden zu lassen, sind in diese ein oder typischerweise mehrere Schneiden eingeprägt. An eine solchermaßen konzipierte Bohrspitze schließt sich ein Gewindeabschnitt an. Das der Bohrspitze gegenüberliegende Ende einer solchen Bohrschraube verfügt über einen Kopf mit einer Antriebskulisse, die beispielsweise als Außensechskant konzipiert sein kann. Auch andere Antriebskulissen, etwa innenliegende, in den Kopf eingeprägte Antriebskulissen, werden verwendet.

Werden derartige Bohrschrauben im Außenbereich eingesetzt, wie dieses beispielsweise bei Dachbauschrauben der Fall ist, müssen aufgrund der Anforderungen an die Korrosionsbeständigkeit Edelstahlschrauben eingesetzt werden. Derartige Schrauben werden unter anderem zum Fixieren von Dachbahnen aus einem relativ weichen Isolations- oder Dämmstoffmaterial an einer festen Unterlage eingesetzt. Die den Befestigungsgrund bildende Unterlage ist bei einer solchen Anwendung typischerweise ein Trapezblech. Somit muss die Bohrspitze bei einer solchen Anwendung geeignet sein, das notwendige Loch in ein solches Blech bohren zu können, damit in diesem das Gewinde der Bohrschraube festgesetzt werden kann. Da mitunter eine solche Bohrschraube auch in bereichsweise übereinander liegende Trapezbleche einzuschrauben ist, muss diese geeignet sein, auch die doppelte Materialstärke eines Trapezbleches bei einer solchen Anwendung durchbohren zu können. Vom Prinzip her ist in DE 199 21 542 A1 eine solche Dachbauschraube beschrieben.

Vorbekannte Edelstahlbohrschrauben sind gemäß einer Ausgestaltung als Bimetallschrauben konzipiert. Bei derartigen Bimetallschrauben handelt es sich um Bohrschrauben, bei denen die Bohrspitze aus einem anderen, härteren Material hergestellt ist als die übrigen Bestandteile der Schraube. Bei derartigen zweiteiligen Bohrschrauben ist es somit erforderlich, die Bohrspitze mit dem Schaft der Schraube zu verbinden. Dieses erfolgt typischerweise durch Reibschweißen, Klemmen oder, wie in DE 10 2007 047 524 A1 offenbart, im Wege einer Schraubverbindung. Derartige Bimetallschrauben haben jedoch Nachteile. Diese sind aufwendig in ihrer Herstellung und genügen nicht notwendigerweise den an sie gestellten Anforderungen vor allem an die Korrosionsbeständigkeit, was durch die Verwendung der unterschiedlichen Materialien bedingt ist. Überdies kann es bei unsachgemäßer Handhabung einer solchen Bimetallschraube vorkommen, dass die Bohrspitze abbricht. Von Vorteil bei einer solchen Ausgestaltung ist, dass die Bohrspitze aus einem für die Zwecke des Bohrens optimalen Material hergestellt werden kann, während sich für den Schraubenschaft und den Kopf ein hinsichtlich seiner notwendigen Umformbarkeit zum Walzen des Gewindes und Stauchen des Kopfes geeignetes Material verwenden lässt. Eine solche zweiteilige Bohrschraube ist auch aus DE 603 11 514 T2 bekannt. Bei den vorbeschriebenen Bimetallbohrschrauben ist die Bohrspitze im Querschnitt rundlich. Zum Ausbilden von Schneiden sind ein oder mehrere Spannuten in radialer Richtung in die Bohrspitze eingebracht. Neben derartigen Bimetallbohrschrauben sind auch solche bekannt geworden, bei denen die Bohrspitze aus einer Schneidplatte besteht, die an den Schaft der Schraube angeschlossen ist. Eine solche Bohrschraube ist beispielsweise aus DE 103 13 635 A1 bekannt.

Neben derartigen zweiteiligen Edelstahlbohrschrauben sind auch einteilige Edelstahlbohrschrauben entwickelt geworden. Eine solche ist in DE 20 2009 011 665 U1 beschrieben. Bei dieser einteiligen Edelstahlbohrschraube ist vorgesehen, dass die Edelstahlbohrschraube aus einem einzigen Drahtabschnitt hergestellt wird, und zwar mit den herkömmlichen Verfahrensschritten zum Herstellen einer Schraube in der üblichen Reihenfolge des Anstauchens des Schraubenkopfes, des Anbringens der Bohrspitze und des Gewindewalzens. Im Anschluss an die Erstellung der Schraube wird diese partiell einsatzgehärtet, und zwar entweder durch partielles Aufkohlen oder Carbonitrieren mit reduziertem C-Pegel oder partielles oder vollständiges Aufsticken der Schraubenoberfläche bei Temperaturen oberhalb von 880°C im Vakuumofen. Zwar werden bei einer solchermaßen konzipierten einteiligen Edelstahlbohrschraube die zu zweiteiligen Schrauben oben aufgezeigten Nachteile vermieden, gleichwohl wird auch das partielle Einsatzhärten als aufwendig angesehen. Da es sich bei derartigen Edelstahlbohrschrauben um Massenartikel handelt, besteht das Bedürfnis, diese mit möglichst einfachen Verfahrensschritten kostengünstig herstellen zu können.

In DE 38 28 446 A1 ist ein Verfahren zur Herstellung von einteiligen Edelstahlbohrschrauben beschrieben. Gemäß diesem vorbekannten Verfahren wird die Bohrspitze im Wege eines Umformprozesses erstellt. Edukt für die Erstellung Bohrspitze ist ein gegenüber dem angrenzenden Schaftabschnitt des Rohlings verjüngter zylindrischer Endabschnitt. Dieser wird durch eine Drückverformung zwischen zwei gegeneinander bewegbaren Drückbacken eines Drückwerkzeuges in einem einzigen Schritt zur Ausbildung der Bohrspitze mit ihren Schneiden umgeformt. Interessanterweise hat sich bei derartigen Edelstahlbohrschrauben gezeigt, dass es beim Bohrvorgang immer wieder Abplatzungen an der Bohrspitze, insbesondere der Schneide kommt. Es wird vermutet, dass hierfür eine zu große Wärmeentwicklung beim Bohrvorgang und damit ein zu starkes Verspröden des Materials verantwortlich sind. Daher eignen sich derartige Edelbohrschrauben nicht, in stärkeres Material, beispielsweise in Bleche mit einer Stärke von mehr als 0,5 mm, insbesondere wenn diese doppellagig zueinander angeordnet sind, eingeschraubt zu werden. Dieses ist jedoch bei Dachbauschrauben, die, wie vorstehend aufgezeigt, bevorzugt aus Edelstahl gefertigt sind, notwendig. Derartige Dachbauschrauben müssen jedoch die im Dachbau typischerweise eingesetzten Trapezbleche, die eine Materialstärke von bis zu 1 mm oder mehr aufweisen von den Dachbauschrauben durchbohrt werden können, auch in den Überlappungsbereichen, in denen diese doppellagig zueinander angeordnet sind.

Ein Verfahren mit den Merkmalen des Oberbegriffs des Anspruchs 1 ist aus JP 53-057351 A bekannt. Mit dem aus diesem Dokument bekannten Verfahren lässt sich jedoch eine Stahlbohrschraube mit hinreichender Härte ohne zusätzliche Härteschritte nicht herstellen.

Ausgehend von diesem diskutierten Stand der Technik liegt der Erfindung daher die Aufgabe zugrunde, ein Verfahren zum Erstellen einer Bohrspitze einer Stahlbohrschraube, typischerweise als Teil des Schraubenherstellungsprozesses, sowie eine Stahlbohrschraube vorzuschlagen, mit dem bzw. mit der auch stärkere Materialien, insbesondere solche, wie diese im Dachbau verwendet werden, also beispielsweise Trapezbleche und dergleichen, unter Vermeidung oder Reduzierung der zu dem Stand der Technik aufgezeigten Nachteile eingesetzt werden können.

Gelöst wir die verfahrensbezogene Aufgabe erfindungsgemäß durch ein eingangs genanntes, gattungsgemäßes Verfahren, bei dem zum Erstellen der eine Schneidplatte aufweisenden Bohrspitze zwei nacheinander ausgeführte Kaltumformschritte durchgeführt werden, wobei der zweite Umformschritt das Einformen zumindest einer Spannut ausgehend von einer Längskante der Schneidplatte in den Schneidplattenrohling beinhaltet.

Die Stahlbohrschrauben bezogene Aufgabe wird erfindungsgemäß durch eine eingangs genannte, gattungsgemäße Schraube gelöst, bei der die Bohrspitze eine gegenüber dem angrenzenden zumindest einen Gewindeabschnitt tragenden Schaft als Abplattung ausgebildete Schneidplatte umfasst, in die unter Ausbildung wenigstens einer Schneide ausgehend von einer Längskante der Schneidplatte zumindest eine Spannut eingebracht ist.

Bei diesem Verfahren wird die Bohrspitze durch zumindest zwei nacheinander durchgeführte Kaltumformschritten erstellt. Es versteht sich, dass die Kaltumformschritte in einander übergehen können. Dabei ist vorgesehen, dass in einem ersten Schritt, ausgehend von einem schaftförmigen, typischerweise zylinderförmigen Rohling, der für die Erstellung der Bohrspitze vorgesehene Endabschnitt gegenüber dem angrenzenden Schaftabschnitt vorzugsweise zweiseitig und somit von bezüglich der Längsachse gegenüberliegenden Seiten abgeplattet wird. Dieser Umformschritt führt zu einer Verdrängung des umgeformten Materiales in radialer Richtung nach außen. Ein Materialfließen in längsaxialer Richtung ist bei diesem Umformschritt nicht erforderlich. Durch diesen Umformschritt des Abplattens wird ein Schneidplattenrohling ausgebildet. Die Abplattung ist als Schneidplattenrohling anzusprechen, da die Schneidplatte ihre endgültige Formgebung erst durch einen nachfolgenden Umformschritt erhält.

Der erste Umformschritt wird typischerweise durchgeführt, damit ein Materialfließen vornehmlich in radialer Richtung nach außen erfolgt, wodurch der Schneidplattenrohling in Verformungsrichtung des Materials über dem Durchmesser des angrenzenden, diesbezüglich undeformierten Schaftabschnittes hervorsteht. In Krafteinwirkungsrichtung der hierfür vorgesehen Werkzeuge ist der Durchmesser bzw. die Dicke des Schneidplattenrohlings gegenüber dem Durchmesser des angrenzenden Schaftabschnittes dagegen reduziert. Erreicht wird durch diese Maßnahme eine zum Ausbilden einer Schneidplatte als Grundkörper für die Bohrspitze notwendige Materialreduzierung an den entsprechenden Seiten des Rohlings. Das Verdrängen von Material in radialer Richtung nach außen führt zu einer Kaltverfestigung des in radialer Richtung nach außen gedrückten, über die Mantelfläche des angrenzenden undeformierten Schaftabschnittes hinein umgeformten Materials. Der in der Flucht des angrenzenden undeformierten Schaftabschnittes befindliche Bereich des Schneidplattenrohlings ist dagegen jedenfalls weitestgehend frei von Kaltverfestigungen. Durch diese Maßnahme wird aufgrund der erfolgten Durchmesser- bzw. Dickenreduzierung zum Zwecke der nachträglichen Ausformung der Bohrspitze Material ohne oder zumindest weitestgehend ohne Kaltverfestigung freigelegt. Wie nachstehend noch gezeigt werden wird, wird das im Zuge dieses ersten Umformschrittes zwangsläufig im Zuge des Wegdrückens von Material in radialer Richtung kaltverfestigte Material für die Ausbildung der Bohrspitze nicht verwendet.

Durch den weiteren Umformschritt wird die Außenkontur der Schneidplatte geformt. Dieses beinhaltet das Ausbilden einer Spitze und der zumindest einen benachbart zu der Spitze befindlichen Schneide. Vorzugsweise werden allerdings zwei Schneiden ausgebildet. Gemäß einem bevorzugten Ausführungsbeispiel werden Schneiden durch Einbringen jeweils einer Spannut in den Schneidplattenrohling ausgebildet, wobei zweckmäßigerweise eine solche Spannut von einer Längskante der Schneidplatte ausgeht.

Bei diesem zweiten Umformschritt wird Material umgeformt, welches durch den ersten Umformschritt nicht, jedenfalls nicht nennenswert kaltverfestigt worden ist. Folglich kann dieses Material noch zumindest weitestgehend im vollen Umfange umgeformt werden, bevor ein solcher Vorgang durch eintretende Kaltverfestigungen beeinträchtigt wird. Die Verwendung bezüglich des Vorhandenseins von Kaltverfestigungen juvenilen Materials, welches durch diesen weiteren Umformschritt umgeformt wird, wiederum ermöglicht eine Formgebung etwa hinsichtlich einer Ausbildung der Radien der Kanten, vor allem der Schneide mit extrem kleinen Radien. Folglich können mit diesem weiteren, im Rahmen dieser Ausführungen als zweiten Umformschritt angesprochenen Umformschritt besonders scharfe Kanten und insbesondere schärfere Kanten ausgebildet werden als dieses mit vorbekannten Verfahren zum Herstellen von einteiligen Edelstahlbohrschrauben möglich ist. Das Vorstehende gilt insbesondere für Stahlbohrschrauben aus Edelstahl, da bei Edelstahl bereits bei relativ geringen Umformbeträgen eine Kaltverfestigung eintritt.

Bei dem Gegenstand des erfindungsgemäßen Verfahrens wird also in geschickter Weise die zum Erstellen einer Bohrspitze zu bewerkstellende Umformarbeit in mehrere Schritte aufgeteilt, und zwar dergestalt, dass für den letzten Umformschritt, mit dem die für die Bohrtätigkeit der Bohrspitze relevanten Geometrien geformt werden, durch den oder die vorangegangenen Umformschritte entweder nicht kaltverfestigtes oder jedenfalls nur unwesentlich kaltverfestigtes Material verwendet wird. Bei vorbekannten einschrittigen Umformverfahren zum Erstellen einer Bohrspitze wird die gesamte Umformarbeit dagegen in einem Schritt durchgeführt, mit der Folge, dass die für die Bohrtätigkeit relevanten Geometrien mit zumindest weitgehend kaltverfestigtem Material erstellt werden müssen. Es versteht sich, dass kaltverfestigter Stahl, insbesondere wenn es sich um Edelstahl handelt, nicht oder nur unzureichend in Geometrien formen lässt. Diese ist bei Verwendung von nicht oder jedenfalls nicht nennenswert kaltverfestigtem Material anders. Die durch das beanspruchte Verfahren geschaffene Möglichkeit, besonders scharfe Schneidkanten auszubilden, hat wiederum zur Folge, dass eine Temperaturentwicklung beim Bohrvorgang aufgrund des besseren Einschneidens der Bohrspitze in das Material reduziert ist.

Auch der zweite Umformprozess führt letztendlich zu einer gewissen, jedoch nicht vollständigen Kaltverfestigung des umgeformten Materials des Schneidplattenrohlings. Dieses wirkt sich jedoch positiv auf die Qualität der Bohrspitze aus, die durch diesen Umformschritt somit zumindest in den äußeren Randschichten durch die Kaltverfestigung gehärtet ist.

Die Konzeption der vorbeschriebenen einteiligen Stahlbohrschraube mit einer Schneidplatte als Bohrspitze, erstellt aus einer Abplattung gegenüber dem angrenzenden Schaftabschnitt, hat ferner zum Vorteil, dass die Querschnittsfläche des bei einer Bohrtätigkeit der Bohrschraube erstellten Loches erheblich größer ist als die Querschnittsfläche der Bohrspitze selbst. Folglich verbleibt ausreichend Raum, bei der Bohrtätigkeit entstehende Späne oder dergleichen aufnehmen zu können. Dieses wiederum reduziert die Reibung und damit die Temperaturentwicklung beim Bohrvorgang.

Es wird angenommen, dass im Rahmen dieser Ausführungen erstmalig eine einteilige Stahlbohrschraube, hergestellt insbesondere aus einem Edelstahlmaterial beschrieben wird, die eine Bohrspitze, gebildet aus einer Schneidplatte als Abplattung gegenüber dem angrenzenden Schaftabschnitt aufweist, in welche Schneidplatte unter Ausbildung einer Schneide ausgehend von einer Längskante derselben zumindest eine Spannut eingebracht ist.

Auch wenn mit dem vorbeschriebenen Konzept des Herstellens einer Bohrspitze einer Stahlbohrschraube sowie mit der vorbeschriebenen einteiligen Stahlbohrschraube bereits verbesserte Bohreigenschaften feststellbar sind, weshalb sich diese Schrauben vor allem auch als Dachbauschrauben eignen, bei welchem Einsatzzweck diese durch Bleche von 1 mm und mehr hindurchgebohrt werden müssen, kann die Leistungsfähigkeit einer solchen Stahlbohrschraube durch Vorsehen eines Schmiermittelüberzuges an der Bohrspitze weiterhin verbessert werden. Bei einer solchen Ausgestaltung ist die Bohrspitze, gegebenenfalls mit den daran angrenzenden ersten Gewindegängen des Schaftabschnittes mit einem geeigneten Überzug ausgerüstet, der typischerweise eingebrannt ist. Hierbei kann es sich beispielsweise um einen Öl-, Harz- oder Wachsüberzug oder auch um ein Gemisch aus den vorstehend genannten Materialien handeln. Es versteht sich, dass auch andere Materialien als Überzug geeignet sind. Bei einem Bohrvorgang wirkt dieser Überzug bzw. das im Zuge eines Bohrvorganges erweichende Material als Schmiermittel. Dieses Schmiermittel dient zum einen zum Verringern der Reibung, jedoch gleichsam als Wärmepuffer. Beim Bohrvorgang entstehende Temperaturen erwärmen zunächst das Schmiermittel und erst dann die Bohrspitze. Mithin bewirkt das Schmiermittel bzw. der Schmiermittelüberzug bei dem Vorgang des Bohrens einen verzögerten Wärmeeintrag in die Bohrspitze, weshalb diese Funktionalität des Schmiermittelüberzuges auch als Wärmepuffer angesprochen wird. Ausgenutzt wird bei diesem Konzept, dass der Bohrvorgang selbst nur von kurzer Dauer ist, mithin die Bohrspitze einer solchen Stahlbohrschraube tatsächlich nur sehr kurze Zeit als solche benötigt wird. Infolge der genannten Verzögerung eines Wärmeeintrages in die Bohrspitze lässt sich auf diese Weise mit einer solchen Bohrspitze auch dickeres Material durchbohren, bevor die Bohrspitze aufgrund einer zu hohen Temperaturbelastung möglicherweise Schaden nimmt. Zum Erreichen einer Kühlfunktionalität, wie vorbeschrieben, ist der Schmiermittelüberzug typischerweise so beschaffen, dass dieser bei einem Bohrvorgang im Zuge eines Temperatureintrages erweicht.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: in einer Seitenansicht eine einteilige Edelstahlbohrschraube mit einer durch eine Schneidplatte gebildeten Bohrspitze,
- **Fig. 2a-2c:**: Herstellungsschritte zum Herstellen der Bohrspitze der Edelstahlbohrschraube der Figur 1 ausgehend von einem Rohling (Figur 2a), nach Durchführen eines ersten Kaltumformschrittes (Figur 2b) und nach Ausformen der Bohrspitze (Figur 2c),
- **Fig. 3:**: eine vergrößerte Darstellung aus dem Bereich der zu erstellenden Bohrspitze der Figur 2b nach dem ersten Umformschritt und
- **Fig. 4:**: eine vergrößerte Darstellung der Bohrspitze nach Durchführen des zweiten Umformschrittes in einer Draufsicht (Figur 4a), in einer Seitenansicht (Figur 4b) sowie in einer Unteransicht (Figur 4c).

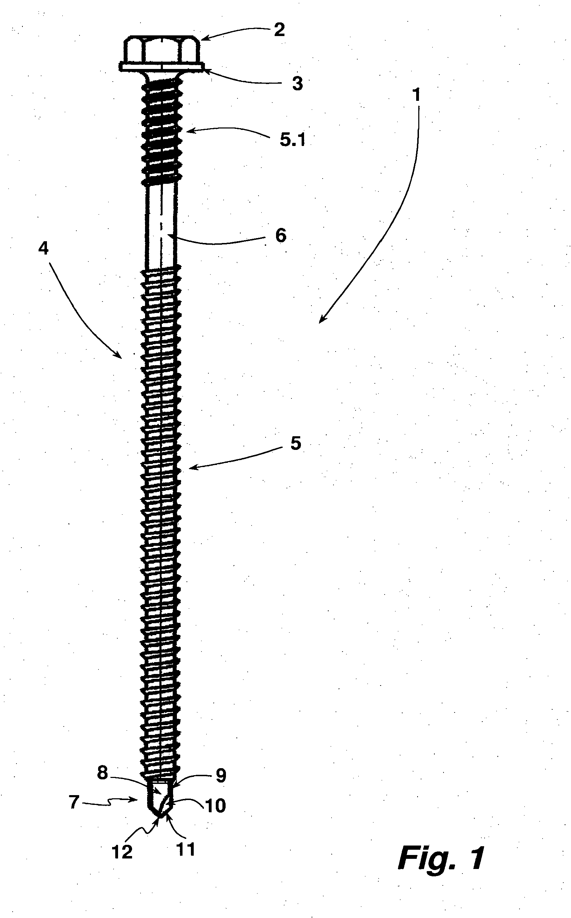

Eine einteilige Edelstahlbohrschraube 1 verfügt über einen im Wege eines Stauchprozesses ausgeformten Schraubenkopf 2 mit einer daran angeformten Beilagscheibe 3. Angeformt an die Beilagscheibe 3 ist ein Schaft 4. Der Schaft 4 trägt zwei Gewindeabschnitte 5, 5.1, welche beiden Gewindeabschnitte 5, 5.1 durch einen gewindefreien Schaftabschnitt 6 voneinander getrennt sind. Die Edelstahlbohrschraube 1 verfügt über eine an den unteren Abschluss des Gewindeabschnittes 5 angeformte Bohrspitze 7. Die Bohrspitze 7 besteht aus einer Schneidplatte 8, in die zwei, jeweils von einer Längskante 9 ausgehende Spannuten 10 eingebracht sind. Eine der beiden Spannuten 10 ist in der Darstellung der Figur 1 erkennbar. Die untere Mündung der Spannut 10 bildet eine Schneide 11. Die Spitze der Edelstahlbohrschraube 1 ist mit dem Bezugszeichen 12 gekennzeichnet. Bei der in den Figuren beispielhaft gezeigten Edelstahlbohrschraube 1 handelt es sich um eine Dachbauschraube.

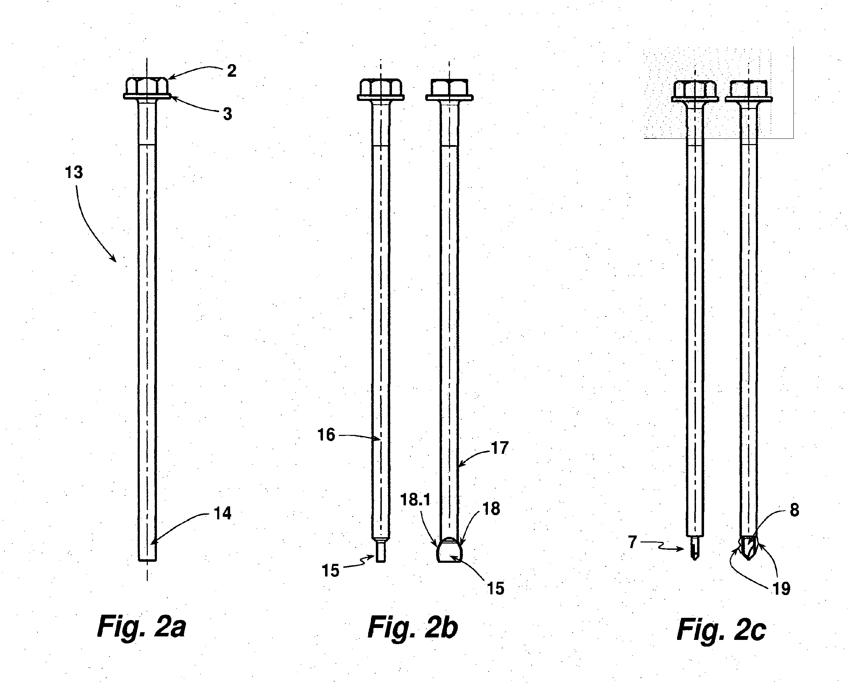

Die Edelstahlbohrschraube 1 wird wie folgt hergestellt:
In einem ersten Verfahrensschritt zum Herstellen der Edelstahlbohrschraube 1 wird an einem zylindrischen Rohling 13 durch Stauchen der Schraubenkopf 2 mit seiner Beilagscheibe 3 gebildet. Bei dem dargestellten Ausführungsbeispiel besteht der Rohling 13 aus einem Edelstahl des Typs 1.4401. Dieser Rohling 13 bildet bei dem beschriebenen Ausführungsbeispiel das Ausgangsprodukt zum Erstellen der Bohrspitze (siehe Figur 2a).

In einem ersten Schritt zum Erstellen der Bohrspitze 7 wird der zum Formen der Bohrspitze 7 vorgesehene Endabschnitt 14 des Rohlings 13 einem ersten Kaltumformschritt unterworfen, und zwar mit dem Ziel, den Endabschnitt 14 beidseitig abzuplatten. Durch diesen Umformschritt wird ein Schneidplattenrohling 15 erstellt, wie dieser in Figur 2b gezeigt ist. Der Schneidplattenrohling 15 des dargestellten Ausführungsbeispieles ist als Abplattung, wie aus Figur 2b links ersichtlich, symmetrisch zur Mittellängsebene 16 des Rohlings 13 ausgeführt. Dieser Umformschritt geht einher mit einer Verringerung des Durchmessers des Abschnittes 14 in der in Figur 2b links gezeigten Richtung und resultiert in einer Materialverdickung V in orthogonaler Richtung hierzu (siehe Figur 2b rechts). Bei dem dargestellten Ausführungsbeispiel wird der Durchmesser des Abschnittes 14 durch diesen ersten Kaltumformschritt zum Erzeugen der Abplattung und damit des Schneidplattenrohlings 15 um etwa 50 % reduziert. Der Umformprozess ist ausgeführt worden, damit ein Materialfließen vornehmlich in radialer Richtung erfolgt, weshalb sich die über die Mantelfläche 17 im Bereich des umgeformten Endabschnittes 14 auskragenden Materiallappen 18, 18.1 ausgebildet haben.

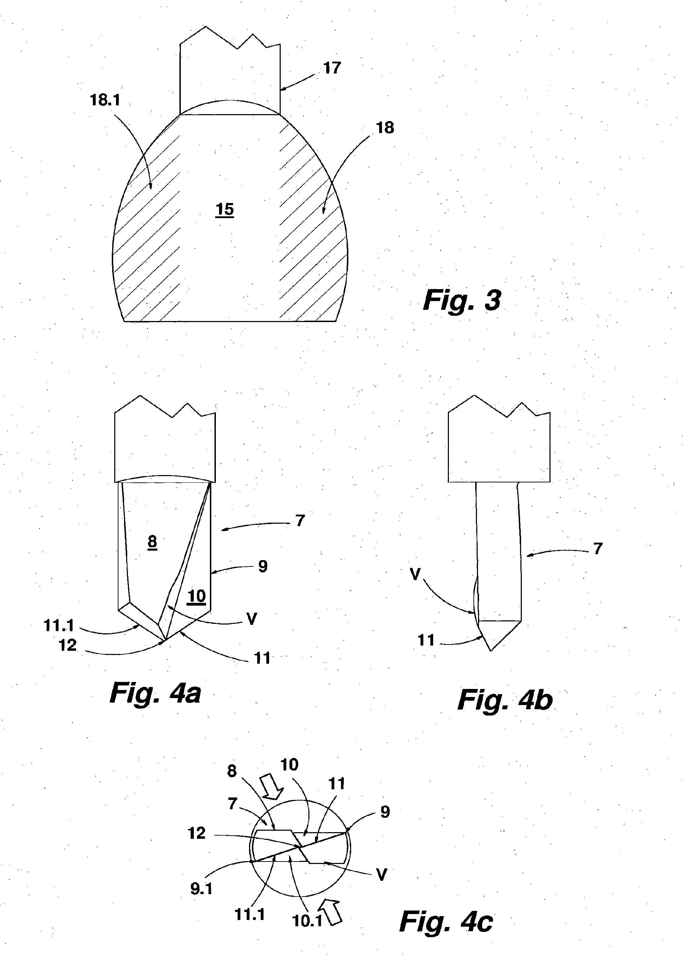

Der Schneidplattenrohling 15 ist in Figur 3 entsprechend der Darstellung der Figur 2b rechts vergrößert gezeigt. Infolge der nicht unerheblichen Umformung durch Erzeugen des Schneidplattenrohlings 15 und dem dadurch bedingten Materialfließen quer zur Wirkrichtung der eingesetzten Drückwerkzeuge sind die vor allem über die Mantelfläche 17 hinaus gehenden Bereiche des Schneidplattenrohlings 15, namentlich das Material in den Materiallappen 18, 18.1 kaltverfestigt. Dieses ist schematisiert in Figur 3 durch die Schraffur kenntlich gemacht. Ein Materialfließen in längsaxialer Richtung ist nicht bzw. in nicht nennenswertem Maße erfolgt. Das Stahlmaterial zwischen den beiden Materiallappen 18, 18.1 des Schneidplattenrohlings 15 ist dagegen frei oder jedenfalls weitestgehend frei von Kaltverfestigungen. Dieser Bereich stellt nun dasjenige Ausgangsmaterial dar, aus dem in einem zweiten Kaltumformschritt die Bohrspitze 7 ausgeformt wird. Das Ergebnis dieses zweiten Kaltumformschrittes ist in Figur 2c in den der Figur 2b entsprechenden Ansichten gezeigt. Deutlich erkennbar ist aus der Darstellung der Figur 2c rechts, dass zum Ausformen der Bohrspitze das Material in den Materiallappen 18, 18.1 des Schneidplattenrohlings 15 nicht verwendet worden ist. Dieses ist durch die benutzen Werkzeughälften abgetrennt worden. Kleinere Materialfahnen 19 als Ausfluss dieses Abtrennvorganges befinden sich an der Außenseite der auf diese Weise gebildeten Schneidplatte 8. Die Darstellung der Bohrspitze 7 der Figur 2c rechts verdeutlicht, dass die Breite der Schneidplatte 8 gegenüber dem angrenzenden Schaftabschnitt geringfügig reduziert ist.

In einem nachfolgenden Schritt werden auf den an die Bohrspitze 7 angrenzenden Schaftabschnitt die Gewindeabschnitte 5, 5.1 eingewalzt. Im Zuge dieses Walzprozesses brechen die Materialfahnen 19 ab, so dass anschließend die in Figur 1 gezeigte Edelstahlbohrschraube fertig gestellt ist.

Figur 4a zeigt in einer vergrößerten Darstellung die durch den zweiten Kaltumformschritt ausgeformte Bohrspitze 7 mit ihrer Schneidplatte 8 und einer der beiden darin eingebrachten Spannuten 10 in einer Draufsicht auf die flächige Erstreckung entsprechend der Darstellung der Bohrspitze 7 in Figur 2c rechts. Der Umformprozess ist zum Erstellen der Bohrspitze 7 derart ausgeführt worden, dass die Schneidplatte 8 in Richtung zur Bohrspitze 12 hin eine Verdickung V aufweist. Durch die Verdickung V wird die Bohrspitze 7 vor allem im Bereich ihrer Schneiden 11, 11.1 verstärkt.

Figur 4b zeigt die Bohrspitze 7 in einer Seitenansicht entsprechend derjenigen der Figur 2c links. Auch in der Seitenansicht ist die Verdickung V erkennbar.

Figur 4c zeigt die fertig ausgeformte Bohrspitze 7 in einer Unteransicht auf ihre Spitze 12. Die punktsymmetrische Ausbildung der Bohrspitze 7 mit ihren beiden Spannuten 10, 10.1 und den beiden durch diese gebildeten Schneiden 11, 11.1 wird deutlich. In Figur 4c sind zwei aufeinander gerichtete Blockpfeile eingetragen. Diese geben die Bewegungsrichtung der beiden zum Ausformen der Bohrspitze 7 verwendeten Formwerkzeuge wieder. Die eingetragene Bewegungsrichtung verdeutlicht, dass durch den zweiten Kaltumformschritt der Schneidplattenrohling 15 winkelig zu seiner flächigen Erstreckung durch die Formwerkzeuge beansprucht wird. Die in Figur 2c rechts angedeuteten Materialfahnen 19 befinden sich in der Ebene der Werkzeugteilung bei geschlossenem Werkzeug, die sich wiederum in einer gedachten, die Längskanten 9, 9.1 verbindenden Ebene befindet. Der Einfachheit halber sind in Figur 4c die Materialfahnen 19 nicht dargestellt.

Nach Ausformen der Gewindegänge kann die Edelstahlbohrschraube 1, wenn gewünscht, im Bereich ihrer Bohrspitze 7 mit einem Schmiermittelüberzug versehen werden, wie dieser bereits vorstehend beschrieben ist.

Untersuchungen haben gezeigt, dass sich mit einer solchen Edelstahlbohrschraube Stahlbleche, insbesondere solche, wie diesem im Dachbau als Trapezbleche eingesetzt werden, ohne Weiteres durchbohren kann, insbesondere wenn, wie dieses an Verbindungsstellen üblich ist, zwei derartiger Bleche überlappend angeordnet sind.

### Bezugszeichenliste

- 1: Edelstahlbohrschraube
- 2: Schraubenkopf
- 3: Beilagscheibe
- 4: Schaft
- 5, 5.1: Gewindeabschnitt
- 6: Schaftabschnitt
- 7: Bohrspitze
- 8: Schneidplatte
- 9: Längskante
- 10, 10.1: Spannut
- 11, 11.1: Schneide
- 12: Spitze
- 13: Rohling
- 14: Endabschnitt
- 15: Schneidplattenrohling
- 16: Mittellängsebene
- 17: Mantelfläche
- 18, 18.1: Materiallappen
- 19: Materialfahne
- V: Verdickung

## Patentansprüche

1. Verfahren zum Erstellen einer eine Schneide (11, 11.1) aufweisenden Bohrspitze (7) einer einteiligen Stahlbohrschraube (1), insbesondere aus einem Edelstahlmaterial, wobei zum Erstellen der Bohrspitze (7) der hierfür vorgesehene Endabschnitt (14) eines schaftförmigen Rohlings (13) umgeformt wird,
- wobei in einem ersten Umformschritt der zur Ausbildung der Bohrspitze (7) vorgesehene Endabschnitt (14) des Rohlings (13) gegenüber dem angrenzenden Schaftabschnitt (6) zum Erstellen eines Schneidplattenrohlings (15) abgeplattet wird und
- wobei in einem zweiten Umformschritt der Schneidplattenrohling (15) zum Ausformen der Bohrspitze (7) umgeformt wird,
**dadurch gekennzeichnet, dass**
- die erste und zweite Umformschritte zwei nacheinander ausgeführte Kaltumformschritte sind; und
- der zweite Umformschritt das Einformen zumindest einer Spannut (10, 10.1) ausgehend von einer Längskante der Schneidplatte (8) in den Schneidplattenrohling (15) beinhaltet.

2. Verfahren nach Anspruch 1, **dadurch gekennzeichnet, dass** mit dem ersten Umformschritt zum Ausbilden der Abplattung das zu verdrängende Material vornehmlich in radiale Richtung gedrückt wird.

3. Verfahren nach Anspruch 1 oder 2, **dadurch gekennzeichnet, dass** mit dem zweiten Umformschritt verdrängtes Material vornehmlich in längsaxialer Richtung in Richtung zu dem freien Ende der Schneidplatte (19) hin gedrückt wird.

4. Verfahren nach einem der Ansprüche 1 bis 3, **dadurch gekennzeichnet, dass** durch den zweiten Umformschritt der Schneidplattenrohling (15) in Richtung zum freien, die Spitze (12) tragenden Ende hin aufgedickt wird.

5. Verfahren nach einem der Ansprüche 1 bis 4, **dadurch gekennzeichnet, dass** die Bohrspitze (7) mit einem einen Bohrvorgang schmierenden Überzug versehen wird.

6. Verfahren nach einem der Ansprüche 1 bis 5, **dadurch gekennzeichnet, dass** in einem sich an die Erstellung der Bohrspitze (7) anschließenden Schritt zum Herstellen der Bohrschraube (1) der oder die Gewindeabschnitte (5, 5.1) in dem an die Bohrspitze (7) grenzenden Schaftabschnitt (6) des Rohlings ausgeformt werden und im Zuge dieses Schrittes an der Bohrspitze (7) befindliche Materialreste (19) abgetrennt werden.

7. Verfahren nach Anspruch 6, **dadurch gekennzeichnet, dass** der oder die Gewindeabschnitte (5, 5.1) im Wege eines Walzprozesses ausgeformt werden.

8. Verfahren nach einem der Ansprüche 1 bis 7, **dadurch gekennzeichnet, dass** das Verfahren zum Erstellen der Bohrspitze (7) Teil eines Verfahrens zum Herstellen einer Stahlbohrschraube (1), hergestellt insbesondere aus einem Edelstahlmaterial, ist und dass vor den Schritten zum Erstellen der Bohrspitze (7) an dem anderen Ende des schaftförmigen Rohlings (13) ein Schraubenkopf (2) geformt wird, etwa im Wege eines formgebenden Stauchvorganges.

9. Einteilige Stahlbohrschraube, insbesondere aus einem Edelstahlmaterial mit einer Bohrspitze (7), hergestellt nach dem Verfahren gemäß einem der Ansprüche 1 bis 9, **dadurch gekennzeichnet, dass** die Bohrspitze (7) eine gegenüber dem angrenzenden zumindest einen Gewindeabschnitt (5, 5.1) tragenden Schaft als Abplattung ausgebildete Schneidplatte (8) umfasst, in die unter Ausbildung wenigstens einer Schneide (11, 11.1) ausgehend von einer Längskante (9, 9.1) der Schneidplatte (8) zumindest eine Spannut (10, 10.1) eingebracht ist.

10. Stahlbohrschraube nach Anspruch 9, **dadurch gekennzeichnet, dass** in die Schneidplatte (8), ausgehend von diagonal zur Längsachse der Bohrspitze (7) verlaufenden Längskanten (9, 9.1), zwei Spannuten (10, 10.1) unter Ausbildung jeweils einer Schneide (11, 111) eingebracht sind.

11. Stahlbohrschraube nach Anspruch 9 oder 10, **dadurch gekennzeichnet, dass** die Stärke der Schneidplatte (8) von ihrer an den Schaft grenzenden Wurzel in Richtung zu ihrem freien Ende hin zunimmt.

12. Stahlbohrschraube nach einem der Ansprüche 9 bis 11, **dadurch gekennzeichnet, dass** zumindest die Bohrspitze (7) mit einem einen Bohrvorgang schmierenden Überzug versehen ist.

13. Stahlbohrschraube nach Anspruch 12, **dadurch gekennzeichnet, dass** der Schmiermittelüberzug ein eingebrannter Öl-, Harz- oder Wachsüberzug ist.

## Claims

1. Method for producing a drilling bit (7), comprising a cutting edge (11, 11.1), of a monoblock steel self-drilling screw (1), in particular made of stainless steel, wherein to produce the drilling bit (7) the end section (14) of a shaft-shaped blank (13) provided for this is re-shaped,
- wherein in a first re-shaping step the end section (14) of the blank (13) provided for forming the drilling bit (7) is flattened against the adjacent shaft section (6) to produce a cutting insert blank (15) and
- wherein in a second re-shaping step, the cutting insert blank (15) is re-shaped to form the drilling bit (7),
**characterised in that**
- the first and second re-shaping steps are two cold forming steps carried out one after the other; and
- the second re-shaping step comprises the forming of at least one flute (10, 10.1) in the cutting insert blank (15) starting from a longitudinal edge of the cutting insert (8).

2. Method according to claim 1, **characterised in that** pressure is applied mainly in a radial direction by the first re-shaping step to form the flattening of the material to be displaced.

3. Method according to claim 1 or 2, **characterised in that** material displaced by the second re-shaping step is pressed mainly in a longitudinally axial direction in the direction of the free end of the cutting insert (19).

4. Method according to any one of claims 1 to 3, **characterised in that** by the second re-shaping step, the cutting insert blank (15) is thickened in the direction of the free end holding the bit (12).

5. Method according to any one of claims 1 to 4, **characterised in that** the drilling bit (7) is given a coating which lubricates a drilling operation.

6. Method according to any one of claims 1 to 5, **characterised in that** in a step immediately following the production of the drilling bit (7) for producing the self-drilling screw (1), the threaded section or sections (5, 5.1) are formed in the shaft section (6) of the blank adjacent to the drilling bit (7), and material residues (19) on the drilling bit (7) are removed in the course of this step.

7. Method according to claim 6, **characterised in that** the threaded section or sections (5, 5.1) are formed by means of a rolling process.

8. Method according to any one of claims 1 to 7, **characterised in that** the method for producing the drilling bit (7) is part of a method for producing a steel self-drilling screw (1), made in particular of stainless steel, and that before the steps to produce the drilling bit (7) on the other end of the shaft-shaped blank (13) a screw head is formed (2), for example by means of a shaping swaging operation.

9. Monoblock steel self-drilling screw, in particular made of stainless steel with a drilling bit (7), produced by the method according to one of the claims 1 to 9, **characterised in that** the drilling bit (7) comprises a cutting insert (8) made as a flattened area against the adjacent shaft bearing at least one threaded section (5, 5.1), in which (cutting insert) at least one flute (10, 10.1) is introduced with the formation of at least one cutting edge (11, 11.1) starting from a longitudinal edge (9, 9.1) of the cutting insert (8).

10. Steel self-drilling screw according to claim 9, **characterised in that** two flutes (10, 10.1) are introduced into the cutting insert (8), starting from longitudinal edges (9, 9.1) running diagonally to the longitudinal axis of the drilling bit (7), wherein in each case a cutting edge (11, 11.1) is formed.

11. Steel self-drilling screw according to claim 9 or 10, **characterised in that** the thickness of the cutting insert (8) increases from its root bordering the shaft in the direction of its free end.

12. Steel self-drilling screw according to one of the claims 9 to 11, **characterised in that** at least the drilling bit (7) is fitted with a coating lubricating a drilling operation.

13. Steel self-drilling screw according to claim 12, **characterised in that** the lubricant coating is a burnt-in oil, resin or wax coating.

## Revendications

1. Procédé de fabrication de la pointe (7) foreuse d'une vis auto-foreuse (1) en acier monobloc présentant un tranchant (11, 11.1), notamment en acier inoxydable, le tronçon d'extrémité (14) d'une pièce brute (13) en forme de tige prévu pour réaliser la pointe (7) foreuse étant usiné,
- au cours d'une première étape d'usinage le tronçon d'extrémité (14) de la pièce brute (13) prévu pour configurer la pointe (7) foreuse à l'opposé du tronçon de tige (6) contigu étant affiné en plaque afin de réaliser une plaque brute de tranchage (15) et
- au cours d'une seconde étape d'usinage, la plaque brute de tranchage (15) étant usinée afin de former la pointe (7) foreuse,
**caractérisé en ce que**
- la première et la seconde étape d'usinage sont deux étapes d'écrouissage réalisées successivement ; et
- la seconde étape d'usinage comprend la formation dans la plaque brute de tranchage (15) d'au moins une rainure de fraisage (10, 10.1) partant d'une arête longitudinale de la plaque de tranchage (8).

2. Procédé selon la revendication 1, **caractérisé en ce que**, au cours de la première étape d'usinage visant à réaliser l'affinage en plaque, le matériau à repousser est essentiellement poussé dans le sens radial.

3. Procédé selon la revendication 1 ou 2, **caractérisé en ce que**, au cours de la seconde étape d'usinage, le matériau repoussé est essentiellement poussé dans le sens longitudinal axial, vers l'extrémité libre de la plaque de tranchage (19).

4. Procédé selon l'une des revendications 1 à 3, **caractérisé en ce que**, sous l'effet de la seconde étape d'usinage, la plaque brute de tranchage (15) est épaissie vers l'extrémité libre qui supporte la pointe (12).

5. Procédé selon l'une des revendications 1 à 4, **caractérisé en ce que** la pointe (7) foreuse est munie d'un revêtement lubrifiant un processus de forage.

6. Procédé selon l'une des revendications 1 à 5, **caractérisé en ce que**, au cours d'une étape de fabrication d'une vis auto-foreuse (1) qui fait suite à la réalisation de la pointe (7) foreuse, le ou les tronçons filetés (5, 5.1) sur le tronçon de la tige (6) contigu à la pointe (7) foreuse de la pièce brute sont formés et au cours de cette étape, les résidus de matériau (19) se trouvant sur la pointe (7) foreuse sont enlevés.

7. Procédé selon la revendication 6, **caractérisé en ce que** le ou les tronçons filetés (5, 5.1) sont usinés au cours d'un processus de laminage.

8. Procédé selon l'une des revendications 1 à 7, **caractérisé en ce que** le procédé de réalisation de la pointe (7) foreuse est une partie d'un procédé de fabrication d'une vis auto-foreuse (1) en acier, notamment fabriquée en acier inoxydable, et qu'avant les étapes de réalisation de la pointe (7) foreuse sur l'autre extrémité de la pièce brute (13) en forme de tige, une tête de vis (2) est usinée, par exemple au cours d'un processus d'écrouissage qui lui donnera sa forme.

9. Vis monobloc auto-foreuse en acier, notamment en acier inoxydable, comprenant une pointe (7) foreuse fabriquée selon le processus de fabrication selon l'une des revendications 1 à 9, **caractérisée en ce que** la pointe (7) foreuse comprend à l'opposé de la tige contiguë supportant au moins un tronçon fileté (5, 5.1), une plaque de tranchage (8) conformée après un affinage en plaque, dans laquelle est aménagée au moins une rainure (10, 10.1) de fraisage pour former au moins un tranchant (11, 11.1) partant d'une arête longitudinale (9, 9.1) de la plaque (8) de tranchage.

10. Vis auto-foreuse en acier selon la revendication 9, **caractérisée en ce que** deux rainures (10, 10.1) de fraisage pour former chacune un tranchant (11, 11.1) sont aménagées dans la plaque (8) de tranchage en partant des arêtes longitudinales (9, 9.1) qui s'étendent diagonalement par rapport à l'axe longitudinal de la pointe (7) foreuse.

11. Vis auto-foreuse en acier selon la revendication 9 ou 10, **caractérisée en ce que** l'épaisseur de la plaque (8) de tranchage augmente en partant de sa racine contiguë à la tige vers son extrémité libre.

12. Vis auto-foreuse en acier selon l'une des revendications 9 à 11, **caractérisée en ce que** la pointe (7) foreuse au moins est munie d'un revêtement lubrifiant un processus de forage.

13. Vis auto-foreuse en acier selon la revendication 12, **caractérisée en ce que** le revêtement lubrifiant est un revêtement à base d'huile, de résine ou de cire appliqué par traitement thermique.
